(19) Europäisches Patentamt
European Patent Office
Office européen des brevets

(11) **EP 0 742 355 B1**

(12) **EUROPÄISCHE PATENTSCHRIFT**

(45) Veröffentlichungstag und Bekanntmachung des Hinweises auf die Patenterteilung:
**23.12.1998 Patentblatt 1998/52**

(51) Int Cl.⁶: **F02C 9/28**

(21) Anmeldenummer: **96106809.5**

(22) Anmeldetag: **30.04.1996**

(54) **Verfahren zur Regelung eines Turbo-Strahltriebwerkes**

Gas turbine control method

Méthode de contrôle d'une turbine à gaz

(84) Benannte Vertragsstaaten:
**CH DE ES FR GB IT LI SE**

(30) Priorität: **06.05.1995 DE 19516693**

(43) Veröffentlichungstag der Anmeldung:
**13.11.1996 Patentblatt 1996/46**

(73) Patentinhaber: **MTU MOTOREN- UND TURBINEN-UNION MÜNCHEN GMBH**
**80976 München (DE)**

(72) Erfinder: **Kurzke, Joachim, Dr.**
**85221 Dachau (DE)**

(56) Entgegenhaltungen:
EP-A- 0 427 952          US-A- 3 893 291
US-A- 3 956 883          US-A- 5 267 435

**Beschreibung**

Die Erfindung betrifft ein Verfahren zur Regelung eines Turbostrahltriebwerkes, bei welchem eine für verschiedene Lufteintritts- und Flugzustandsgrößen gegebene korrigierbare Vollast-Turbinentemperatur $T_{v\,soll}$ mittels eines Reglers eingestellt und gespeichert wird. Ein solches Regelverfahren ist aus der US-A-5267435 bekannt.

Die Leistung einer Gasturbine ist direkt abhängig von der im Betrieb maximal zulässigen Brennkammeraustrittstemperatur. Diese ist nicht direkt meßbar. Statt dessen wird in der Praxis eine Temperatur im Turbinenbereich gemessen. Dabei kann man Thermoelemente - stromaufwärts oder stromabwärts von der Niederdruckturbine angeordnet - verwenden oder auch Pyrometer, die direkt die Rotorschaufeltemperatur der Hoch- oder der Niederdruckturbine messen.

Die Gasturbinenkomponenten (Verdichter, Turbinen, Dichtungen usw.) unterliegen während des Betriebes einem Alterungsprozeß. Durch Abnutzung und Verschmutzung sinken die Komponentenwirkungsgrade. Die internen Leckagen können sich vergrößern. Dadurch sinkt die abgegebene Leistung bzw. der Schub bei vorgegebener Turbinentemperatur. Eine Regelung auf konstante Turbinentemperatur wird daher zu einem allmählichen Leistungsabfall führen.

Die Verminderung der abgegebenen Leistung im Laufe der Zeit ist für viele Anwendungen unerwünscht. Eine Regelung auf konstante Leistung ist erforderlich.

Sie führt allerdings dazu, daß sich mit zunehmender Betriebszeit die Turbinentemperaturen allmählich erhöhen.

Im Falle einer Fluggasturbine mit einer Düse (also ein Einstromtriebwerk oder ein Zweistromtriebwerk mit Mischung) kann der abgegebene Schub bei stationärem Betrieb und ungestörter Zuströmung zum Triebwrk sehr gut aus dem Totaldruck P2 und der Totaltemperatur T2 am Triebwerkseintritt, der Niederdruckdrehzahl NL, einem gemessenen Druck am Düseneintritt $Ps_7$ und der Schubdüsenfläche A8 bestimmt werden.

Bei dem vorbekannten Regelverfahren nach der eingangs genannten US-PS wird der Leistungsabfall der Gasturbine durch Anhebung der Vollastturbinentemperatur in der Weise geregelt, daß die Turbinenvollasttemperatur entsprechend einem vorgegebenen Muster bis zu einer maximalen Grenztemperatur, die in diesem Muster vorgegeben ist, angehoben wird.

Dieses Regelverfahren hat den Nachteil, daß bei instationären Zuständen und besonders bei gestörter Zuströmung zum Triebwerk (ungleichmäßige Totaldruckverteilung über dem Umfang und dem Radius) es nicht möglich ist, den Schub ausreichend genau aus den oben aufgeführten Meßwerten zu bestimmen. Würde man in einem solchen Fall auf einen aus stationären Zusammenhängen hergeleiteten Parameter regeln, dann könnte man entweder zuviel oder zuwenig Schub erzeugen - das hängt von den speziellen Gegebenheiten ab.

Wenn zuviel Schub erzeugt wird, dann wird die Turbine unnötig heiß gefahren und verliert an Lebensdauer.

Die Regelung der Gasturbine auf eine gemessene Temperatur im Turbinenbereich gewährleistet den besten Schutz der Heißteile und minimiert somit den Lebensdauerverbrauch von Brennkammer und Turbinen. Um den mit Alterungsprozessen verbundenen Leistungsverlust zu vermeiden, ist jedoch eine mit der Betriebszeit veränderliche Temperaturbegrenzung erforderlich.

Aufgabe der vorliegenden Erfindung ist es, ein Verfahren zur Regelung eines Turbostrahltriebwerks anzugeben, bei dem die Turbinentemperatur im Laufe der Betriebszeit so angehoben wird, daß die Triebwerksleistung bzw. der Schub des Strahltriebwerks trotz der im Lauf der Betriebszeit auftretenden Verschlechterung der Triebwerkskomponenten und trotz veränderter Leckagen konstant hoch bleiben kann.

Erfindungsgemäß wird die gestellte Aufgabe dadurch gelöst, daß bei einem Regelverfahren nach dem Oberbegriff des Patentanspruchs 1 der Sollwert der Düse dene Lufteintritts- un Flugzustände gegebenen Düsendrucksollwertes $Ps_{7\,soll}$ für Vollast die eingestellte Vollast-Turbinetemperatur $T_{v\,soll}$ um einen betriebszeitabhängigen Korrekturwert $dT_K$ korrigiert wird,der sich aus einem Satz gemessener Eingangs- und Regelgrößen bei stationärem Vollast- oder Teillast-Betriebszustand des Triebwerkes ergibt, wobei die Vollast-Turbinentemperatur $T_{v\,soll}$ maximal gleich der höchst zulässigen Turbinentemperatur $T_{v\,max}$ ist.

Vorteilhaft ist es, wenn der Korrekturwert $dT_K$ aus der Differenz zwischen der höchst zulässigen Turbinentemperatur $T_{v\,max}$ und einer Turbinenisttemperatur $T_{ist}$ und nach Abzug einer errechneten Temperaturerhöhung $dT_1$ gebildet wird, die zur Erzielung des Düsendrucksollwertes $Ps_{7\,soll}$ für Vollast ausgehend von der Turbinenisttemperatur $T_{ist}$ notwendig ist.

Die Temperaturerhöhung $dT_1$ soll vorzugsweise aus einer gespeicherten Korrelation errechnet werden, die die Differenz zwischen dem stationär gemessenen Düsendruckistwert $Ps_{7\,ist}$ und dem Düsendrucksollwert $Ps_{soll}$ in Abhängigkeit des Betriebszustandes verwendet.

Weitere vorteilhafte Ausgestaltungen und Weiterbildungen des erfindungsgemäßen Verfahrens sind in den Patentansprüchen 4 bis 8 aufgezeigt.

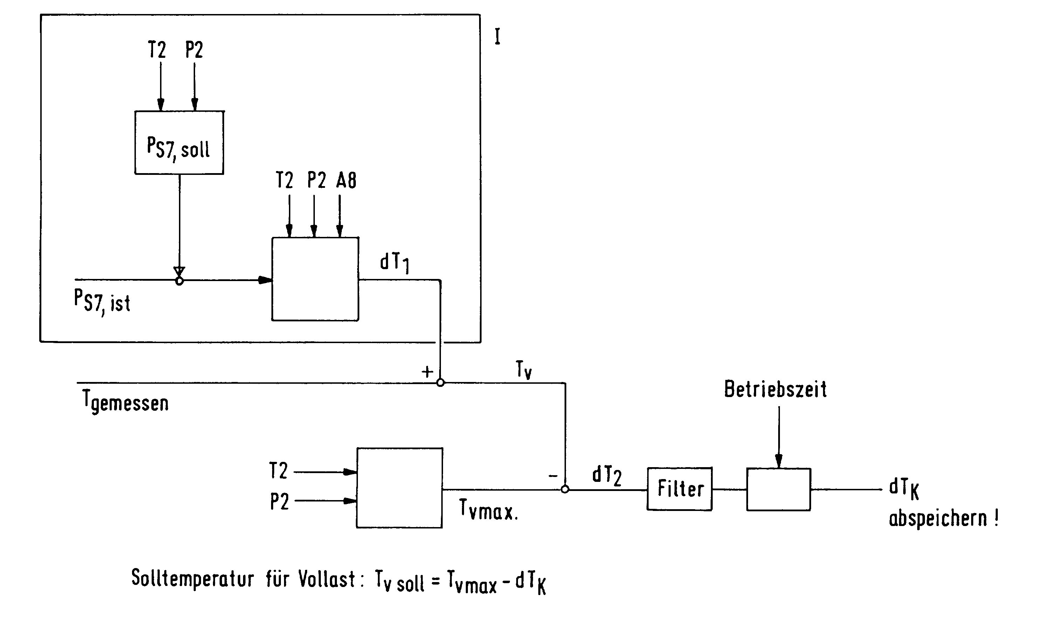

Anhand des Blockschaltbildes der beigefügten Zeichnung wird ein Ausführungsbeispiel des erfindungsgemäßen Regelverfahrens erläuert. Die dargestellte Regelung ist für ein Turbostrahltriebwerk in Einstrom- oder Zweistrombauweise mit oder ohne Mischung anwendbar. Das hier behandelte Beispiel legt ein Zweistromtriebwerk mit Mischung der beiden Ströme zugrunde; es gelten folgende Bezeichnungen:

1. Totaldruck am Triebwerkseintritt P2
2. Totaltemperatur am Triebwerkseintritt T2
3. Niederdruckdrehzahl NL

4. Hochdruckdrehzahl NH
5. Gashebelstellung PLA ( = Drosselgrad)
6. statischer Düseneintrittsdruck $Ps_7$
7. Düsenfläche A8
8. Turbinentemperatur T

Für stationäre Betriebszustände mit ungestörter Zuströmung zum Triebwerk wird ein Sollwert für den statischen Druck am Düseneintritt $Ps_{7\,soll}$ abhängig von den Triebwerkseintrittsbedingungen T2 und P2 definiert und als feste Korrelation im digitalen Regler gespeichert.

$$Ps_{7\,soll} = f(T2, P2)$$

Der Sollwert $Ps_{7\,soll}$ wird so definiert, daß der durch die Gashebelstellung "Vollast" gewünschte Schub erreicht wird.

Es wird ferner eine feste Korrelation für den Sollwert der Turbinentemperatur T im digitalen Regler gespeichert:

$$T_{v\,soll} = f(T2, P2)$$

Der Sollwert $T_{v\,soll}$ wird so definiert, daß ein durchschnittliches neues Triebwerk bei Gashebelposition "Vollast" den statischen Düseneintrittsdruck $Ps_{7\,soll}$ erzeugt.

Das Triebwerk soll bei Gashebelstellung auf "Vollast" und stationärem Betrieb stets am Temperaturbegrenzer betrieben werden, es sei denn, ein anderer Grenzwert (z. B. eine maximale Drehzahl oder ein maximal zulässiger Druck) erfordert eine niedrigere Turbinentemperatur.

Während des Fluges wird vom digitalen Regler geprüft, ob ein stationärer Betriebszustand des Triebwerks vorliegt. Die Kriterien dafür sind:

1. Gashebelstellung unverändert seit x Sekunden
2. T2 hat sich seit x Sekunden um weniger als $\pm y_T$ geändert.
3. P2 hat sich seit x Sekunden um weniger als $\pm y_P$ geändert
4. Bei variabler Düse:
A8 hat sich um weniger als $\pm y_{A8}$ geändert.
5. NL hat sich um weniger als $\pm y_{NL}$ geändert.
6. NH hat sich um weniger als $\pm y_{NH}$ geändert.
7. Das Flugzeug befindet sich seit x Sekunden in einer stationären Fluglage, die zu nur unbedeutenden Störungen in der Zuströmung zum Triebwerk führt.

Wenn es sich nach obigen Kriterien um einen stationären Betriebszustand handelt und außerdem T2 sowie P2 in jeweils begrenzten Wertebereichen liegen, dann sind alle für die folgende Berechnung benötigten Meßwerte im digitalen Regler als "Schnappschuß" (= Momentanzustand) abzuspeichern.

Berechnung:

Im Schnappschuß werden u. a. die Turbinentemperatur gemessen und der statische Düseneintrittsdruck $Ps_7$ gemessen. Die Temperaturänderung, die notwendig wäre, um den Vollastwert von $Ps_7$ zu erreichen, wird bestimmt aus folgender im digitalen Regler gespeicherten Korrelation, die im Blockschaltbild mit I bezeichnet ist.

$$I \qquad dT_1 = f(Ps_{7\,gemessen} - Ps_{7\,soll}, T2, P2, A8)$$

Dieser Wert dT wird zum Meßwert $T_{gemessen}$ addiert und ergibt diejenige Temperatur, die notwendig wäre, um den Vollastschub zu erreichen:

$$T_V = T_{gemessen} + dT_1$$

(repräsentativ für Vollast).

Es gibt für jeden Flugzustand eine maximal zulässige Temperatur, die auch bei einem gealterten Triebwerk nicht überschritten werden darf. Diese absolute Temperaturobergrenze werde mit $T_{V\,max}$ bezeichnet. $T_V$ wird nun mit $T_{V\,max}$ verglichen:

$$dT_2 = T_{V\,max} - T_V.$$

Der Wert $dT_2$ beschreibt also die Temperaturreserve, die noch für die Kompensation von Komponentenverschlechterungen zur Verfügung steht.

Während des Betriebes des Triebwerkes kann $dT_2$ ein oder mehrmals bestimmt werden. Wenn mehrere Werte für $dT_2$ bestimmt werden konnten, dann ist für die folgenden Berechnungen derjenige auszuwählen, bei dem der Meßwert $T_{gemessen}$ am nächsten am Sollwert für Vollast $T_{v\,soll}$ liegt.

Die Erfahrung zeigt, daß der gemäß oben beschriebener Vorschrift bestimmte Wert für $dT_2$ in der Praxis durch zufällige Störungen in den Meßwerten eine nicht unerhebliche Streuung haben wird. Daher wird $dT_2$ noch gefiltert. Der Wert $dT_2$ wird als Eingangswert in einem Algorithmus verwendet, der den Trend von $dT_2$ als Funktion von der Betriebszeit des Triebwerkes feststellt. Das kann zum Beispiel ein Algorithmus sein, der den gleitenden Mittelwert über eine bestimmte Anzahl von Betriebsstunden feststellt.

Das Ergebnis des Algorithmus ist der Wert $dT_K$. Dieser Wert gibt an, um wieviel der Turbinentemperatursollwert für Vollast verändert werden muß, um betriebszeitunabhängigen Vollastschub zu erreichen. $dT_K$ ist bereinigt von allen zufälligen Steuungen und von Meßrauschen. Der Wert $dT_K$ ist in der digitalen Regelung abzuspeichern. Der Wert $dT_K$ kann auch außerhalb der Regelung aus während des Fluges abgespeicherten Momentaufnahmen berechnet werden.

Der Wert $dT_K$ wird nach dem nächsten Start des Triebwerkes verwendet, den Wert für $T_{v\,soll}$ zu korrigieren. Damit wird erreicht, daß der Sollwert für die Turbinentemperatur bei Vollast stets so angepaßt ist, daß für alle Flugzustände, bei denen das Triebwerk am Temperaturbegrenzer geregelt wird, der Schub unabhängig von der Betriebszeit bzw. der Qualität des Triebwerks bleibt.

Der Wert $dT_K$ ist in seiner Änderungsrate in geeigneter Weise zu begrenzen. Durch Begrenzung von $dT_K$ auf positive Zahlwerte wird sichergestellt, daß auch nach Korrektur von $T_{v\,soll}$ um den Betrag $dT_K$ die absolute Temperaturobergrenze $T_{v\,max}$ nicht überschritten wird.

## Patentansprüche

1. Verfahren zur Regelung eines Turbo-Strahltriebwerkes, bei welchem eine für verschiedene Lufteintritts- und Flugzustandsgrößen gegebene, korrigierbare Vollast-Turbinentemperatur ($T_{v\,soll}$) mittels eines Reglers eingestellt und gespeichert wird, dadurch gekennzeichnet, daß zur Erzielung eines für verschiedene Lufteintritts- und Flugzustände gegebenen Düsendrucksollwertes ($Ps_{7\,soll}$) für Vollast die eingestellte Vollast-Turbinentemperatur ($T_{v\,soll}$) um einen betriebszeitabhängigen Korrekturwert ($dT_K$) korrigiert wird, der sich aus einem Satz gemessener Eingangsund Regelgrößen bei stationärem Vollast- oder Teillast-Betriebszustand des Triebwerkes ergibt, wobei die Vollast-Turbinentemperatur ($T_{v\,soll}$) maximal gleich der höchst zulässigen Turbinentemperatur ($T_{max}$) ist.

2. Verfahren nach Anspruch 1, dadurch gekennzeichnet, daß der Korrekturwert ($dT_K$) aus der Differenz zwischen der höchst zulässigen Turbinentemperatur ($T_{max}$) und einer Turbinenisttemperatur ($T_{ist}$) und nach Abzug einer errechneten Temperaturerhöhung ($dT_1$) gebildet wird, die zur Erzielung des Düsendrucksollwertes ($Ps_{7\,soll}$) für Vollast ausgehend von der Turbinenisttemperatur ($T_{ist}$) notwendig ist.

3. Verfahren nach Anspruch 2, dadurch gekennzeichnet, daß die Temperaturerhöhung $dT_1$ aus einer gespeicherten Korrelation errechnet wird, die die Differenz zwischen dem stationär gemessenen Düsendruckistwert $Ps_{7\,ist}$) und dem Düsendrucksollwert ($Ps_{soll}$) in Abhängigkeit vom Betriebszustand verwendet.

4. Verfahren nach Anspruch 3, dadurch gekennzeichnet, daß sich der Betriebszustand aus einer vom stationär gemessenen Satz stammenden Lufteintrittstemperatur ($T_2$) und einer dabei eingestellten Schubdüsenquerschnittsfläche ($A_8$) ergibt.

5. Verfahren nach einem der vorhergehenden Ansprüche, dadurch gekennzeichnet, daß die Bestimmung des Korrekturwertes ($dT_K$) während eines Fluges bei stationären Betriebszuständen periodisch erfolgt.

6. Verfahren nach einem der vorhergehenden Ansprüche, dadurch gekennzeichnet, daß bei Bestimmung mehrerer Korrekturwerte ($dT_K$) während eines Fluges (d. h. während eines Zeitintervalles) der bei der höchsten Turbinenisttemperatur errechnete Korrekturwert ($dT_K$) für die Korrektur der Vollast-Turbinentemperatur ($T_{v\,soll}$) herangezogen wird.

7. Verfahren nach einem der vorhergehenden Ansprüche, dadurch gekennzeichnet, daß die Korrektur der Vollast-Turbinentemperatur ($T_{v\,soll}$) durch einen statistisch bereinigten Korrekturwert ($dT_{K\,trend}$) aus einer Anzahl einzelner Korrekturwerte ($dT_K$) erfolgt.

8. Verfahren nach einem der vorhergehenden Ansprüche, dadurch gekennzeichnet, daß die Korrektur der Vollast-Turbinentemperatur ($T_{v\,soll}$) in einem Zusatzgerät zum Triebwerk aus während des Fluges aufgezeichneten Meßwerten bestimmt und in den Triebwerksregler übertragen wird.

## Claims

1. A method for regulating a turbo jet engine, in which a correctable full-load turbine temperature ($T_{v\,soll}$), given for different air inlet and flight condition values, is set and stored by means of a regulator, characterised in that to obtain a given desired nozzle pressure value ($Ps_{7\,soll}$) for different air inlet and flight conditions for full-load, the set full-load turbine temperature ($T_{v\,soll}$) is corrected by a correction value ($dT_k$), dependent on operating time, which correction value is a result of a set of measured input and control variables at a stationary full-load or partial-load operating condition of the engine, the full-load turbine temperature ($T_{v\,soll}$) being at maximum equal to the highest permissible turbine temperature ($T_{max}$).

2. A method according to claim 1, characterised in that the correction value ($dT_k$) is formed by the difference between the highest permissible turbine temperature ($T_{max}$) and an actual turbine temperature ($T_{ist}$) and after subtraction of a calculated temperature increase ($dT_1$), which is necessary for obtaining the desired nozzle pressure value ($Ps_{7\,soll}$) for full-load, starting from the actual turbine temperature ($T_{ist}$).

3. A method according to claim 2, characterised in that the temperature increase ($dT_1$) is calculated from a stored correlation, which uses the difference between the stationary measured actual nozzle pressure value ($Ps_{7\,ist}$) and the desired nozzle pressure value ($Ps_{soll}$) depending on the operating condition.

4. A method according to claim 3, characterised in that the operating condition is a result of an air inlet temperature ($T_2$) originating from a stationary measured set, and a thus set thrust nozzle cross-sectional area ($A_8$).

5. A method according to any one of the preceding claims, characterised in that the setting of the correction value ($dT_k$) during a flight, is carried out periodically at stationary operating conditions.

6. A method according to any one of the preceding claims, characterised in that when setting several correction values ($dT_k$) during a flight, i.e. during a time interval, the correction value ($dT_k$) calculated at the highest actual turbine temperature is used for the correction of the full-load turbine temperature ($T_{v\,soll}$).

7. A method according to any one of the preceding claims, characterised in that the correction of the full-load turbine temperature ($T_{v\,soll}$) is carried out by a statistically adjusted correction value ($dT_{K\,trend}$) from a number of individual correction values ($dT_K$).

8. A method according to any one of the preceding claims, characterised in that the correction of the full-load turbine temperature ($T_{v\,soll}$), in a supplementary apparatus to the engine, is defined by measurements recorded during the flight and is transmitted to the engine regulator.

**Revendications**

1. Procédé de régulation d'un turboréacteur selon lequel, pour différentes grandeurs d'entrée d'air et d'état de vol, on règle une température de turbine de pleine charge corrigée ($T_{vcons}$) à l'aide d'un régulateur et on met en mémoire, caractérisé en ce que pour arriver à une valeur de consigne de pression de tuyère ($PS_{7cons}$), donnée, pour différents états d'entrée d'air et de vol, pour la pleine charge, on corrige la température de turbine de pleine charge, réglée ($T_{vcons}$), d'une valeur de correction ($dT_K$) dépendant du temps de fonctionnement, valeur qui résulte des grandeurs d'entrée de régulation, mesurées pour l'état de charge maximale et de charge partielle du moteur, la température de la turbine en pleine charge ($T_{vcons}$) étant au maximum égale à la température maximale autorisée pour la turbine ($T_{max}$).

2. Procédé selon la revendication 1, caractérisé en ce que la valeur de correction ($dT_K$) résulte de la différence entre la température maximale autorisée ($T_{max}$) de la turbine et d'une température d'entrée de turbine ($T_{reel}$), après déduction d'une augmentation de température calculée ($dT_1$), nécessaire pour obtenir la valeur de consigne de la pression de tuyère ($PS_{7cons}$), pour la pleine charge en partant de la température d'entrée de turbine ($T_{reel}$).

3. Procédé selon la revendication 2, caractérisé en ce qu' on calcule l'augmentation de température ($dT_1$) à partir de la corrélation enregistrée représentant la différence entre la valeur réelle, stationnaire de la pression ($Ps_{7reel}$) et la valeur de consigne de la pression de tuyère ($PS_{cons}$) selon l'état de fonctionnement.

4. Procédé selon la revendication 3, caractérisé en ce que l'état de fonctionnement résulte d'un jeu mesuré de manière stationnaire formé de la température d'entrée d'air ($T_2$) et d'une surface de section en tuyère de poussée ($A_8$) ainsi réglée.

5. Procédé selon l'une quelconque des revendications précédentes, caractérisé en ce qu' on détermine périodiquement la valeur de correction ($dT_K$) pendant un vol pour des états de fonctionnement stationnaires.

6. Procédé selon l'une quelconque des revendications précédentes, caractérisé en ce qu' en déterminant plusieurs valeurs de correction ($dT_K$) pendant un vol, (c'est-à-dire dans un intervalle de temps) on utilise la valeur de correction ($dT_K$) calculée pour la température d'entrée la plus élevée possible, pour corriger la température de turbine de pleine charge ($T_{vcons}$).

7. Procédé selon l'une quelconque des revendications précédentes, caractérisé en ce qu' on corrige la température de turbine de pleine charge ($T_{vcons}$) par une valeur de correction à nettoyage statistique ($dT_{K\,trend}$) à partir d'un nombre de valeurs de correction ($dT_K$) séparées.

8. Procédé selon l'une quelconque des revendications précédentes,
caractérisé en ce qu'
on transmet la correction de la température du turbine de pleine charge ($T_{vcons}$) à un appareil complémentaire au moteur pendant le vol, pour lui fournir des valeurs de mesure et on transmet au régulateur du moteur.

Solltemperatur für Vollast: $T_{v\,soll} = T_{vmax} - dT_K$

EP 0 742 355 B1